# EUROPÄISCHE PATENTSCHRIFT

(11) **EP 0 698 408 B1**
(45) Veröffentlichungstag und Bekanntmachung des Hinweises auf die Patenterteilung: **23.09.1998**
(21) Anmeldenummer: 95106392.4
(22) Anmeldetag: 28.04.1995
(51) Int. Cl.: B01D 35/143, B01D 46/42, F02M 35/08

(54) **Vorrichtung zur Anzeige des Verschmutzungsgrades eines Filters**
Device for the indication of the contamination level of a filter
Dispositif indicateur du degré de contamination d'un filtre

(30) Priorität: 23.08.1994 DE 9413558 U
(43) Veröffentlichungstag der Anmeldung: 28.02.1996
(73) Patentinhaber: FILTERWERK MANN & HUMMEL GmbH, 71638 Ludwigsburg (DE)
(72) Erfinder: Koch, Volker, D-70193 Stuttgart (DE); Schnabel, Werner, D-74747 Ravenstein (DE)
(74) Vertreter: Voth, Gerhard, Dipl.-Ing.

(56) Entgegenhaltungen:
- DE-A- 3 921 013
- DE-A- 4 224 721
- DE-A- 4 375 577

## Beschreibung

Die Erfindung betrifft eine Vorrichtung zur Anzeige des Verschmutzungsgrades eines Luftfilters bei einer Brennkraftmaschine.

In Fahrzeugen werden Luftfilter bislang noch nicht überwacht. Ein Filterwechsel erfolgt vielmehr nach bestimmten Wartungsvorgaben des Herstellers. Die Vorgaben sind dabei so gewählt, daß sichergestellt ist, daß auch bei erschwerten Umgebungsbedingungen, d.h. erhöhtem Staubanfall das Filter rechtzeitig gewechselt wird. Dies bedeutet auf der anderen Seite, daß das Filter evtl. früher gewechselt wird als es vom Verschmutzungsgrad her nötig wäre.

Aus der DE-A 42 24 721 ist eine Vorrichtung bekannt, die mit der Verknüpfung eines Differenzdrucksignals und eines Drehzahlsignals versucht, den Verschmutzungsgrad des Filters zu bestimmen. Hierzu ist zum einen ein Differenzdrucksensor, insbesondere ein U-Rohr-Manometer vorgesehen. Außerdem wird die Drehzahl des Motors mit einem Drehzahlsensor erfaßt.

Nachteilig bei der bekannten Vorrichtung ist die eingeschränkte Funktionsweise. Bei einem Motor mit Turbolader ist eine Differenzdruckmessung nicht oder nur noch sehr eingeschränkt durchführbar, da der Ladedruck die Differenzdruckmessung verfälscht. Auch reicht allein das Drehzahlsignal nicht aus, um den Motorzustand bzw. die Betriebsart des Motors zu erfassen.

Der Erfindung liegt deshalb die Aufgabe zugrunde, eine Vorrichtung zu schaffen, die geeignet ist, bei allen Arten von Motoren eine zuverlässige Aussage über den Verschmutzungsgrad eines Luftfilters zu machen.

Diese Aufgabe wird ausgehend von dem Oberbegriff des Anspruchs 1 durch dessen kennzeichnende Merkmale gelöst. Kerngedanke der Erfindung ist die kombinierte Erfassung dreier Größen, nämlich 1. des Drucks auf der Reinluftseite des Filters, 2. der Motordrehzahl, 3. des Lastzustandes des Motors.

Zur Erfassung des reingasseitigen Drucks hat sich beispielsweise ein sogenannter MANN-Wartungsschalter, der aus der Mann+Hummel-Information VKD 7040.3 bekannt ist, bewährt. Selbstverständlich sind auch andere Arten von Wartungsschaltern einsetzbar. Zur Erfassung der Drehzahl sind eine Vielzahl von Sensoren bekannt. Üblicherweise wird die Drehzahl bei einem Kraftfahrzeugmotor im Rahmen der Motorregelelektronik erfaßt. Dieses Drehzahlsignal kann für die neuerungsgemäße Vorrichtung angewendet werden.

Der Lastzustand des Motors läßt sich beispielsweise über die Stellung des Gaspedals sensieren. Auch die Stellung des Gaspedals wird bei neueren Fahrzeuge elektronisch abgegriffen, so daß auch dieses Signal bereits zur Verfügung steht. Diese drei Signale werden verknüpft und zu einem Anzeigesignal zusammengefaßt.

Der Vorteil bei der Anwendung dieser Signale liegt darin, daß eine Messung des Verschmutzungsgrades des Filters nicht im Vollastbereich, wie bisher üblich, durchgeführt werden muß, sondern bereits im Teillastbereich durchführbar ist. In einer Ausgestaltung der Erfindung wird vorgeschlagen, digitale Sensoren zu verwenden. Diese weisen einen wesentlich einfacheren Aufbau aus als analog arbeitende Sensoren. Aufgrund der Einfachheit des Verfahrens lassen sich solche Sensoren in vorteilhafter Weise anwenden.

Eine weitere Ausgestaltung der Erfindung sieht vor, den Drucksensor mit einer Justiereinrichtung zu versehen. Damit besteht die Möglichkeit, die Vorrichtung an Motoren unterschiedlicher Größe bzw. unterschiedlicher Leistung anzupassen.

Die Verknüpfungsschaltung für die Vorrichtung kann gemäß einer Ausgestaltung der Erfindung eine elektronische Schaltung in Form eines EPROM sein. Dieses läßt sich in die Motorsteuerelektronik integrieren.

Zur Verbesserung des Anzeigeverhaltens kann eine Iteration durchgeführt werden, Um den im Teillastbereich gemessenen Wert auf den Vollastwert hochzurechnen ist es möglich, eine Extrapolation des gemessenen Wertes durchzuführen. Damit kann festgestellt werden, ob aufgrund des Verschmutzungsgrades des Filters bereits eine Reduzierung des Luftdurchsatzes bei Vollast auftreten würde.

Diese und weitere Merkmale von bevorzugten Weiterbildungen der Erfindung gehen außer aus den Ansprüchen auch aus der Beschreibung und den Zeichnungen hervor.

Die Erfindung wird anhand eines Ausführungsbeispiels näher erläutert.

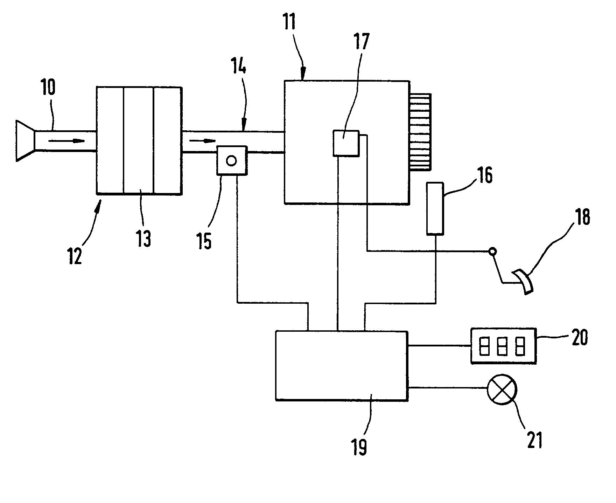

Die Figur zeigt eine schematische Darstellung der Vorrichtung zur Anzeige des Verschmutzungsgrades eines Filters.

In einer Ansaugleitung 10 für eine Brennkraftmaschine 11 ist ein Filtergehäuse 12 angeordnet. In diesem Filtergehäuse befindet sich ein Filter 13, beispielsweise ein zickzack-förmig gefaltetes Plattenfilterelement. Die mittels des Filters gereinigte Luft wird über die Ansaugleitung 14 der Verbrennungskraftmaschine zugeführt. Es sind insgesamt drei Sensoren vorgesehen. Ein Drucksensor 15 ist an der reinluftseitigen Ansaugleitung 14 angeordnet, ein Drehzahlsensor 16 ist am Motor angeordnet und erfaßt die Motordrehzahl, ein Sensor zur Erfassung des Lastzustandes 17 erfaßt beispielsweise den Stellweg des Gaspedals 18. Selbstverständlich kann der Lastzustand des Motors auch über andere Mittel, beispielsweise auch die Motorsteuerelektronik erfaßt werden.

Die von den drei Sensoren erzeugten Signale werden einer elektronischen Schaltung 19, beispielsweise einem EPROM zugeführt. Diese elektronische Schaltung verknüpft in einfacher Weise die Sensorsignale und erzeugt an einem Anzeigedisplay 20 oder an einer Warnlampe 21 ein Signal, wenn ab einer bestimmten Drehzahl und unterhalb eines definierten Lastzustandes ein über dem Schwellwert des Druckschalters eingestellter Unterdruck anliegt.

In einfachster Weise könnten also die Sensorsignale über eine Und-Verknüpfung das Ausgangssignal erzeugen. Der Sensor 15 zur Bestimmung des Unterdrucks ist einstellbar. Damit besteht die Möglichkeit, die gesamte Anordnung auf verschiedene Motorcharakterisken zu justieren. Sowohl die Grenzdrehzahl als auch der Lastzustandsgrenzwert sollte nicht sehr hoch eingestellt werden. Er sollte sich möglichst jeweils im mittleren Bereich befinden, damit der Verschmutzungsgrad des Filters auch zuverlässig dort festgestellt werden kann, wo ein Fahrzeug in einer Weise bewegt wird, die nur selten bis in den mittleren Lastbereich reicht.

Ferner besteht auch die Möglichkeit, die Fahrstrecke des Fahrzeugs zu erfassen und mit den genannten Daten zu verknüpfen.

## Patentansprüche

1. Vorrichtung zur Anzeige des Verschmutzungsgrades eines Luftfilters bei einer Brennkraftmaschine mit einem Drucksensor und einem Sensor zur Erfassung der Motordrehzahl, dadurch gekennzeichnet, daß ein weiterer Sensor (17) vorgesehen ist, welcher den Lastzustand des Motors (11) erfaßt, und daß die Signale der drei Sensoren (15, 16, 17) zur Abgabe eines Anzeigesignals (20, 21) verknüpft sind.

2. Vorrichtung nach Anspruch 1, dadurch gekennzeichnet, daß der Drucksensor (15) und/oder der Motordrehzahlsensor (16) und/oder der Lastzustandsensor (17) ein digitales Signal erzeugen.

3. Vorrichtung nach Anspruch 1 oder 2, dadurch gekennzeichnet, daß der Schwellwert des Drucksensors (15) einstellbar ist.

4. Vorrichtung nach einem der vorhergehenden Ansprüche, dadurch gekennzeichnet, daß die Signale einem elektronischen Schaltkreis, insbesondere einem EPROM zugeführt werden und diese elektronische Schaltung das Anzeigesignal erzeugt.

5. Vorrichtung nach einem der vorhergehenden Ansprüche, dadurch gekennzeichnet, daß eine Iterationsschaltung vorgesehen ist, die nach einer bestimmten Anzahl von Messungen das Signal auslöst.

6. Vorrichtung nach einem der vorhergehenden Ansprüche, dadurch gekennzeichnet, daß die Sensoren im wesentlichen im Teillastbereich ein Signal erzeugen und eine Extrapolationsschaltung vorgesehen ist, die die Reduzierung des Luftdurchsatzes aufgrund der Verschmutzung des Luftfilters (13) bei Vollast ermittelt.

## Claims

1. Apparatus for indicating the degree of contamination of an air filter in an internal combustion engine, said apparatus including a pressure sensor and a sensor for detecting the engine speed, characterised in that an additional sensor (17) is provided, which detects the state of load of the engine (11), and in that the signals of the three sensors (15, 16, 17) for issuing a display signal (20, 21) are interlinked.

2. Apparatus according to claim 1, characterised in that the pressure sensor (15) and/or the engine speed sensor (16) and/or the state of load sensor (17) generate/generates a digital signal.

3. Apparatus according to claim 1 or 2, characterised in that the threshold value of the pressure sensor (15) is adjustable.

4. Apparatus according to one of the preceding claims, characterised in that the signals are supplied to an electronic circuit, more especially to an EPROM, and this electronic circuit generates the display signal.

5. Apparatus according to one of the preceding claims, characterised in that an iteration circuit is provided, which releases the signal after a predetermined number of measurements.

6. Apparatus according to one of the preceding claims, characterised in that the sensors generate a signal substantially in the partial load range, and an extrapolation circuit is provided, which determines the reduction in the air throughput caused by the contamination of the air filter (13) at full load.

## Revendications

1. Dispositif indicateur du degré de contamination d'un filtre d'air monté sur un moteur à combustion interne équipé d'un détecteur de pression et d'un détecteur de la vitesse de rotation du moteur,
caractérisé en ce qu'
il est prévu un autre détecteur (17) détectant l'état de charge du moteur (11), les signaux des trois détecteurs (15, 16, 17) étant combinés entre eux pour délivrer un signal indicateur (20,21).

2. Dispositif selon la revendication 1,
caractérisé en ce que
le détecteur de pression (15) et/ou le détecteur de vitesse du moteur (16) et/ou le détecteur de l'état de charge (17) délivrent un signal numérique.

3. Dispositif selon la revendication 1 ou 2,
caractérisé en ce que
la valeur de seuil du détecteur de pression (15) est réglable.

4. Dispositif selon une des revendications précédentes,
caractérisé en ce que
les signaux sont transmis à un circuit électronique, en particulier un EPROM qui délivre le signal indicateur.

5. Dispositif selon une des revendications précédentes,
caractérisé en ce que
le circuit électronique opère par itération et délivre le signal après un certain nombre de mesures.

6. Dispositif selon une des revendications précédentes,
caractérisé en ce que
les détecteurs délivrent un signal essentiellement dans le domaine des charges partielles et il est prévu un circuit d'extrapolation qui détermine la réduction due à la contamination du filtre à air (13), du débit d'air traversant le filtre à pleine charge.
